# NEUE EUROPÄISCHE PATENTSCHRIFT

(11) **EP 1 789 491 B2**
(45) Veröffentlichungstag und Bekanntmachung des Hinweises auf die Entscheidung über den Einspruch: **18.11.2020**
(45) Hinweis auf die Patenterteilung: 12.07.2017
(21) Anmeldenummer: 05777958.9
(22) Anmeldetag: 30.08.2005
(51) Int. Cl.: C08L 33/12

(54) **VERWENDUNG VON POLYALKYL(METH)ACRYLAT-PERLPOLMERISATEN UND FORMMASSE ZUR HERSTELLUNG VON EXTRUDIERTEN FORMTEILEN MIT MATTIERTER OBERFLÄCHE**
USE OF POLYALKYL(METH)ACRYLATE BEAD POLYMERS AND MOULDING MATERIAL FOR PRODUCING EXTRUDED MOULDED PARTS WITH A MATT SURFACE
UTILISATION DE POLYMERES PERLES DE POLYALKYL(METH)ACRYLATE, ET MATIERE A MOULER POUR REALISER DES PIECES MOULEES EXTRUDEES PRESENTANT UNE SURFACE MATTE

(30) Priorität: 16.09.2004 DE 102004045296
(43) Veröffentlichungstag der Anmeldung: 30.05.2007
(73) Patentinhaber: Röhm GmbH, 64295 Darmstadt (DE)
(72) Erfinder: SCHULTES, Klaus, 65193 Wiesbaden (DE); BATTENHAUSEN, Peter, 63636 Brachttal (DE); GOLCHERT, Ursula, 64807 Dieburg (DE); NAU, Stefan, 64572 Büttelborn (DE); HÖSS, Werner, Shanghai 200030 (CN)
(74) Vertreter: Röhm Patent Association
(86) Internationale Anmeldenummer: PCT/EP2005/009310
(87) Internationale Veröffentlichungsnummer: WO 2006/029704

(56) Entgegenhaltungen:
- EP-A- 0 596 290
- EP-A- 1 022 115
- EP-A- 1 219 641
- EP-A1- 0 596 290
- EP-A1- 0 700 966
- EP-A1- 1 022 115
- EP-A2- 0 781 808
- WO-A-01/12719

## Beschreibung

Die vorliegende Erfindung betrifft die Verwendung von Polyalkyl(meth)acrylat-Perlpolymerisaten. Des Weiteren betrifft die vorliegende Erfindung Formmassen zur Herstellung von extrudierten Formteilen mit mattierter Oberfläche.

Formmassen auf Basis von Polymethylmethacrylat werden für verschiedene Anwendungen eingesetzt. Hierzu werden die Massen zu Formteilen extrudiert oder spritzgegossen. Im Allgemeinen zeichnen sich diese Formkörper durch die typischen Polymethylmetacrylat-Eigenschaften, wie hohe Kratzfestigkeit, Witterungsbeständigkeit, Wärmeformbeständigkeit und hervorragende mechanische Kennwerte aus.

Für einige Anwendungen, insbesondere in der Möbelindustrie, wird eine matte Oberfläche aufgrund einer angenehmeren Haptik, des optischen Effekts und einer geringeren Kratzempfindlichkeit gewünscht. Eine derartige Oberfläche kann durch Maßnahmen bei der Extrusion erzielt werden. Nachteilig hierbei ist jedoch, dass eine Umformung zu einer glatten Oberfläche führt, so dass bevorzugt eine Mattierung durch die Einarbeitung von organischen beziehungsweise anorganischen Partikeln erzielt wird. Diese hiermit modifizierten Formmassen zeigen jedoch als Extrudat in der Regel ein schlechtes Spannungsrissverhalten. Dies zeigt sich insbesondere im direkten Vergleich von Extrudaten, die keine Mattierungspartikel umfassen.

Die Verbesserung der Spannungsrissbeständigkeit durch Zusatzstoffe wird beispielsweise in EP-A-781808 beschrieben. Gegenstand dieser Druckschrift sind Formmassen, die eine verbesserte Spannungsrissbeständigkeit aufweisen. Allerdings umfassen diese Formmassen keine Mattierungsmittel. Darüber hinaus besteht die Lösung gemäß dieser Druckschrift in einer Formmasse, die 1 bis 50 Gew-% an Partikeln mit einer Größe von 50 bis 500 Nanometern enthalten. Nachteilig an dieser Lösung sind die zusätzlichen Kosten, die durch die Verwendung dieser speziellen Partikel entstehen. Darüber hinaus müssen diese Polymerpartikel durch Emusionspolymersation hergestellt werden. Dementsprechend umfassen diese Partikel zwangsweise einen relativ hohen Gehalt an Tensiden und Emulgatoren, die einen nachteiligen Effekt auf die Formmasse beziehungsweise die hieraus erhältlichen Formkörper haben können.

In Anbetracht des hierin angegebenen und diskutierten Stand der Technik war es mithin Aufgabe der vorliegenden Erfindung Formmassen zu finden, die sich durch Extrusion zu spannungsrissbeständigen Formkörpern mit mattierten Oberflächen formen lassen, die ein hervorragendes Eigenschaftsprofil aufweisen. Die durch die Formmassen erhältlichen Gegenstände sollten insbesondere eine gute Verformbarkeit, eine hohe Witterungsbeständigkeit, gute mechanische Eigenschaften, insbesondere eine gute Schlagzähigkeit und ein hohesE-Modul, sowie eine hohe Wärmebeständigkeit aufweisen.

Darüber hinaus sollten die Formmassen sowie die aus den Formmassen erhältlichen Formkörper kostengünstig herstellbar sein. Des weiteren sollten die Formkörper eine hohe Kratzfestigkeit zeigen, wobei insbesondere entstandene Kratzer visuell kaum erkennbar sein sollten.

Gelöst werden diese Aufgaben sowie weitere, die zwar nicht explizit genannt werden, sich aber aus den hierin diskutierten Zusammenhängen wie selbstverständlich ableiten lassen oder sich aus diesem zwangsläufig ergeben, durch die in Anspruch 1 beschriebene Verwendung.

Zweckmäßige Abwandlungen der erfindungsgemäßen Verwendung werden in den auf Anspruch 1 zurückbezogenen Unteransprüchen unter Schutz gestellt.

Hinsichtlich der Formmassen bieten die Ansprüche 12 bis 17 eine Lösung der zugrunde liegenden Aufgabe.

Bezüglich der Formkörper liefern die Ansprüche 18 bis 23 ein hervorragendes Resultat in Bezug auf die zugrunde liegenden Probleme.

Durch die Verwendung von Polyalkyl(meth)acrylat-Perlpolymersaten mit einer mittleren Teilchengröße V₅₀ im Bereich von 30 bis 70 µm gelingt es überraschend die Spannungsrissbeständigkeit von Polyalkyl(meth)acrylat umfassenden Formmassen, die mindestens 80 Gew.-% Polyalkyl(meth)acrylate umfassen, zu verbessern, die zur Herstellung von Formkörpern mit mattierter Oberfläche verwendet werden können.

Darüber hinaus werden durch die erfindungsgemäßen Maßnahmen unter anderem folgende Vorteile erzielt:
Durch die erfindungsgemäße Verwendung gelingt es Formmassen, die mindestens 80 Gew.-% Polyalkyl(meth)acrylate umfassen, zur Herstellung von Formkörpern zur Verfügung zu stellen, die eine hohe Spannungsrissbeständigkeit zeigen. Des weiteren weisen die aus den Formmassen erhältlichen Formkörper hervorragende mechanische Eigenschaften, insbesondere ein hohes E-Modul auf.

Die durch die Verwendung erhältlichen Formmassen können zur Herstellung von Formkörpern mit einer hohen Wärmebeständigkeit, Lichtbeständigkeit und Kratzfestigkeit dienen.

Darüber hinaus sind Kratzer, die auf der Oberfläche entstanden sind, visuell kaum zu erkennen.

Des weiteren sind durch die vorliegende Verwendung Formmassen erhältlich, die besonders einfach schlagzäh modifiziert werden können.

Darüber hinaus kann die Spannungsrißbeständigkeit von Polyalkyl(meth)acrylat-Formmassen durch die erfindungsgemäße Verwendung kostengünstig verbessert werden.

Die im Rahmen der vorliegenden Erfindung einzusetzenden Polyalkyl(meth)acrylat- Perlpolymerisate sind an sich bekannt. Diese werden üblich durch Polymerisation von Zusammensetzungen erhalten, die einen hohen Anteil an (Meth)acrylaten umfassen.

Die zu polymerisierende Zusammensetzung weist mindestens 80 Gew.-% (Meth)acrylat, bezogen auf das Gewicht der Monomeren, auf. Der Ausdruck polymerisierbare Zusammensetzung bezeichnet ethylenisch ungesättigte Monomere, die einzeln oder als Mischung eingesetzt werden können.

Der Ausdruck (Meth)acrylate umfaßt Methacrylate und Acrylate sowie Mischungen aus beiden. Diese Monomere sind weithin bekannt.

Zu diesen gehören unter anderem
(Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat;
(Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat;
Aryl(meth)acrylate, wie Benzyl(meth)acrylat oder Phenyl(meth)acrylat, wobei die Arylreste jeweils unsubstituiert oder bis zu vierfach substituiert sein können;
Cycloalkyl(meth)acrylate, wie 3-Vinylcyclohexyl(meth)acrylat, Bornyl(meth)acrylat;
Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat;
Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid,
1-Methacryloylamido-2-methyl-2-propanot; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acrytoyloxyethyl)sulfid;
mehrwertige (Meth)acrylate, wie Butandioldimethacrylat, Glycerintri(meth)acrylat Trimethyloylpropantri(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Im allgemeinen werden diese Verbindungen in einer Menge von 0 bis 50 Gew.-%, vorzugsweise 0 bis 40 Gew.-% und besonders bevorzugt 0 bis 20 Gew.-%, bezogen auf das Gewicht der Monomeren, eingesetzt, wobei die Comonomere einzeln oder als Mischung verwendet werden können.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und
Diene, wie beispielsweise 1,2-Divinylbenzol, 1,3-Divinylbenzol, 1,4-Divinylbenzol, 1,2-Diisopropenylbenzol, 1,3- Diisopropenylbenzol und 1,4-Diisopropenylbenzol.

Bevorzugte Polyalkyl(meth)acrylat-Perlpolymerisate können durch Polymerisation von Zusammensetzungen erhalten werden, die
a) 10 bis 100 Gew.-%, bevorzugt 30 bis 99 Gew.-% und besonders bevorzugt 50 bis 98 Gew.-% Methylmethacrylat
b) 0 bis 30 Gew.-%, bevorzugt 0,1 bis 20 Gew.-% und besonders bevorzugt 1 bis 10 Gew.-% vernetzende Monomere und
c) 0 bis 90 Gew.-%, bevorzugt 5 bis 70 Gew.-% und besonders bevorzugt 10 bis 40 Gew.-%, einwertige Comonomere, wobei die Prozentangabe jeweils auf das Gewicht der Monomere bezogen ist, erhalten werden.

Vernetzende Monomere sind an sich bekannt. Diese Monomere umfassen mindestens zwei radikalisch polymerisierbare Gruppen, die mit Methylmethacrylat copolymerisierbar sind. Hierzu gehören die zuvor dargelegten mehrwertigen (Meth)acrylate und Diene. Die einwertigen Comonomere umfassen eine radikalisch polymerisierbare Gruppe und sind mit Methylmethacrylat copolymerisierbar. Zu diesen gehören die zuvor dargelegten (Meth)acrylate sowie die mit diesen copolymerisierbaren Monomere.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,1 bis 10 Gew.-%, vorzugsweise von 0,5 bis 3 Gew.-%, bezogen auf das Gesamtgewicht der Monomeren, eingesetzt.

Die im Rahmen der vorliegenden Erfindung einsetzenden Polyalkyl(meth)acrylat- Perlpolymerisate weisen eine mittlere Teilchengröße im Bereich von 30 bis 70 µm, vorzugsweise 35 bis 60 µm auf.

Diese Teilchengrößen können durch Perlpolymerisation auf bekannte Weise erhalten werden.

Die Ermittlung der Teilchengröße sowie der Teilchengrößenverteilung kann mittels Laserextinktionsverfahren erfolgen. Hierbei kann ein Galay-CIS der Firma L.O.T. GmbH verwendet werden, wobei die Messmethode zur Bestimmung der Teilchengröße sowie der Teilchengrößenverteilung im Benutzerhandbuch enthalten ist. Die mittlere Teilchengröße von V₅₀ ergibt sich aus dem Median des Gewichtsmittels, wobei 50 Gew.-% der Teilchen kleiner oder gleich und 50 Gew.-% dieser Teilchen größer oder gleich diesem Wert sind.

Die Polyalkyl(meth)acrylat- Perlpolymerisate sind vorzugsweise sphärisch. Der Begriff sphärisch bezeichnet im Rahmen der vorliegenden Erfindung, dass die Partikel vorzugsweise eine kugelförmige Gestalt aufweisen, wobei dem Fachmann offensichtlich ist, dass aufgrund der Herstellungsmethoden auch Partikel mit anderer Gestalt enthalten sein können, oder dass die Form der Partikel von der idealen Kugelgestalt abweichen kann.

Dementsprechend bedeutet der Begriff sphärisch, dass das Verhältnis von der größten Ausdehnung der Partikel zur geringsten Ausdehnung maximal 4, vorzugsweise maximal 2 beträgt, wobei diese Ausdehnungen jeweils durch den Schwerpunkt der Partikel gemessen werden. Vorzugsweise sind mindestens 70, besonders bevorzugt mindestens 90 %, bezogen auf die Zahl der Partikel, sphärisch.

Gemäß einem besonderen Aspekt der vorliegenden Erfindung liegen diese Teilchen gleichmäßig verteilt in der Kunststoffmatrix vor, ohne dass eine nennenswerte Aggregation oder Zusammenlagerung der Partikel auftritt. Gleichmäßig verteilt bedeutet, dass die Konzentration an Partikeln innerhalb der Kunststoffmatrix im wesentlichen konstant ist.

Üblich wird die Dispersionspolymerisation in Wasser durchgeführt.

Das Verhältnis Wasser zu Monomer liegt üblicherweise im Bereich von 0,4:1 bis 20:1, bevorzugt von 2:1 bis 8:1, bezogen auf das Gewicht der Komponenten.

Zur Stabilisierung der Dispersion ist die Verwendung von Stabilisatoren, die in Wasser schwer löslich sind, notwendig. Hierbei können insbesondere anorganische oder organische Verbindungen eingesetzt werden. Bevorzugt werden Aluminiumverbindungen verwendet. Hierzu gehören insbesondere Aluminiumoxid Al₂O₃ und Aluminiumhydroxid Al(OH)₃, wobei Al(OH)₃ bevorzugt ist. Von besonderem Interesse ist Aluminiumhydroxid, das durch Fällung hergestellt wird, wobei diese Fällung möglichst kurz vor Bildung der Dispersion erfolgen sollte. In besonderen Ausführungsformen des Verfahrens erfolgt die Fällung innerhalb von 2 Stunden, vorzugsweise innerhalb von 1 Stunde und ganz besonders bevorzugt innerhalb von 30 Minuten vor Bildung der Dispersion.

Beispielsweise kann Al₂(SO₄)₃ in Wasser gelöst werden. Diese Lösung kann anschließend mit einer Natriumcarbonat-Lösung versetzt werden bis der pH-Wert im Bereich von 5 bis 5,5 liegt. Durch diese Vorgehensweise wird eine kolloidale Verteilung der Aluminiumverbindung im Wasser erhalten, die besonders bevorzugt ist.

Die Stabilisatoren, insbesondere die Aluminiumverbindungen, werden vorzugsweise in einer Menge von 0,5 bis 200 Gew.-%, besonders bevorzugt 1 bis 100 Gew.-% und ganz besonders bevorzugt 2 bis 20 Gew.-%, bezogen auf das Gesamtgewicht der verwendeten Monomere, eingesetzt. Bei Einsatz geringerer Mengen besteht die Gefahr, daß nur eine instabile Dispersion erhalten wird und eine Phasentrennung, zumindest aber die Bildung von größeren Aggregaten eintritt. Werden größere Mengen verwendet, so besteht die Gefahr, daß eine einheitliche Dispersion nicht erzielt werden kann.

Von besonderem Interesse sind auch Verfahren weitere Hilfsmittel zur Stabilisierung eingesetzt werden. Hierzu gehören insbesondere oberflächenaktive Stoffe, wie beispielsweise anionische, kationische und neutrale Emulgatoren.

Anionische Emulgatoren sind z.B. Alkalimetallsalze von höheren Fettsäuren mit 8 bis 30 Kohlenstoffatomen, wie Palmitin-, Stearin- und Ölsäure, Alkalimetallsalze von Sulfonsäuren mit beispielsweise 8 bis 30 Kohlenstoffatomen, insbesondere Natriumsalze von Alkyl- oder Arylalkylsulfonsäuren, Alkalimetallsalze von Halbestern der Phthalsäure, und Alkalimetallsalze von Harzsäuren, wie Abitinsäure.

Kationische Emulgatoren sind unter anderem Salze langkettiger, insbesondere ungesättigter Amine mit 10 bis 20 Kohlenstoffatomen, oder quaternäre Ammoniumverbindungen mit längerkettigen Olefin- oder Paraffinresten.

Neutrale Emulgatoren sind z.B. ethoxylierte Fettalkohole, ethoxylierte Fettsäuren und ethoxylierte Phenole und Fettsäureester von mehrwertigen Alkoholen wie Pentaerythrit oder Sorbit.

Die zuvor genannten Emulgatoren werden vorzugsweise im Bereich von 0 bis 5 Gew.-%, besonders bevorzugt von 0,3 bis 3 Gew.-%, bezogen auf das Gewicht der Aluminiumverbindung, eingesetzt.

Darüber hinaus können der Mischung vor, während oder nach Bildung der Dispersion die üblichen Zusatzstoffe und Hilfsmittel beigefügt werden. Hierzu gehören insbesondere Stoffe, die den Partikeln bestimmte Eigenschaften verleihen, wie Polymere, Farbstoffe und Pigmente, die gegebenenfalls ferromagnetische Eigenschaften aufweisen. Des weiteren können Komplexbildner, wie EDTA oder Trilon A, und Verbindungen, welche die Bildung von Kesselbelag verhindern, wie Polyethylenglykol, eingesetzt werden.

Die Teilchengröße ist im allgemeinen von dem eingesetzten Stabiliatorsystem abhängig. Des Weiteren kann die Teilchengröße insbesondere über die Schergeschwindigkeit verändert werden. Die genauen Werte der Schergeschwindigkeit können vom Fachmann leicht optimiert werden, wobei diese von dem eingesetzten Stabilisatorsystem abhängig sind.

Die Polymerisation kann bei Normaldruck, Unter- od. Überdruck durchgeführt werden. Auch die Polymerisationstemperatur ist unkritisch. Je nach verwendetem Initiatorsystem liegt sie im allgemeinen jedoch im Bereich von 0° - 200°C, vorzugsweise 40° - 130°C und besonders bevorzugt 60° - 120°C, ohne daß hierdurch eine Beschränkung erfolgen soll.

Nach Beendigung der Polymerisation kann die Aluminiumverbindung beispielsweise durch Zugabe von Schwefel- oder Salzsäure in eine wasserlösliche Form überführt werden. Das Perlpolymerisat kann durch Filtration unter Druck vom Wasser abgetrennt werden, ohne daß Probleme auftreten. Werden bekannte organische Verbindungen anstatt der Aluminiumverbindung zur Stabilisierung der Dispersion eingesetzt, ist eine derartige Filtration aufgrund der rheologischen Eigenschaften der Mischung nicht möglich.

Die gemäß dem zuvor beschriebenen Verfahren erhaltenen Perlpolymerisate werden in Polyalkyl(meth)acrylat umfassende Formmassen eingearbeitet, um zum Gegenstand der vorliegenden Erfindung zu gelangen. Formmassen sind Zusammensetzungen, die sich thermoplastisch verarbeitet werden können.

Besonders bevorzugte Formmassen weisen mindestens 60 Gew.-%, bezogen auf das gesamte Gewicht der Formmasse, Matrixpolymere auf, die durch Polymerisation einer Monomerenmischung erhältlich sind, die mindestens 10 Gew.-%, bevorzugt mindestens 20 Gew.-%, (Meth)acrylate, insbesondere Methylmethacrylat aufweist. In besonderen Ausgestaltungen beträgt der Anteil dieser bevorzugten Matrixpolymere mindestens 80 Gew.-%. Hinsichtlich der (Meth)acrylate kann auf die zuvor dargelegte Definition verwiesen werden. Hierbei ist die Verwendung von Methylmethacrylat besonders bevorzugt.

Hierzu gehören insbesondere Poly(meth)acrylate mit einem hohen Anteil an Einheiten, die von Methylmethacrylat abgeleitet sind, der vorzugsweise mindestens 60 Gew.-%, besonders bevorzugt mindestens 80 Gew.-% beträgt.

Derartig besonders bevorzugte Formmassen sind unter dem Handelsnamen Acrylite® von der Fa. Cyro Inc. USA kommerziell erhältlich.

Das Gewichtsmittel des Molekulargewichts *M̅_{w}* der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 350 000 g/mol, ohne daß hierdurch eine Einschränkung erfolgen soll.

Gemäß einem besonderen Aspekt der vorliegenden Erfindung wird die Formmasse durch einen Schlagzähmodifier mechanisch stabiler ausgerüstet. Der artige Schlagzähmodifizierungsmittel für Polymethacrylat-Kunststoffe sind hinlänglich bekannt, so sind die Herstellung und der Aufbau von schlagzähmodifizierten Polymethacrylat-Formmassen unter anderem in EP-A 0 113 924, EP-A 0 522 351, EP-A 0 465 049 und EP-A 0 683 028 beschrieben.

Gemäß einem besonderen Aspekt der vorliegenden Erfindung können die zur Herstellung von schlagzähmodifizierten Formmassen Polymethylmethacrylate verwendet werden, die durch radikalische Polymerisation von Mischungen erhalten werden, die 80 bis 100 Gew.-%, vorzugsweise 90 - 98 Gew.-%, Methylmethacrylat und gegebenenfalls 0 - 20 Gew.-%, bevorzugt 2 - 10 Gew.-% weitere radikalisch polymerisierbaren Comonomere umfassen, die ebenfalls zuvor aufgeführt wurden. Besonders bevorzugte Comonomere sind unter anderem C₁- bis C₄-Alkyl(meth)acrylate, insbesondere Methylacrylat, Ethylacrylat oder Butylmethacrylat.

Die erfindungsgemäßen schlagzähen Polyalkyl(meth)acrylat-Formmassen umfassen 5 bis 20 Gew,-% Polymethylmethacrylate, deren mittleres Molekulargewicht M_{w} der im Bereich von 20.000 bis 350.000 g/mol, bevorzugt 90.000 g/mol bis 200.000 g/mol, insbesondere 100.000 g/mol bis 150.000 g/mol liegt.

Die erfindungsgemäßen schlagzähen Formmassen, die zur Herstellung der Matrix dienen können, enthalten 0,5 bis 99, bevorzugt 50 bis 95, besonders bevorzugt 60 bis 90, eines Schlagzähmodifizierungsmittels, bezogen auf das gesamte Gewicht der schlagzähen, Perlpolymerisat enthaltenden Formmasse, auf.

Das Gewichtsverhältnis von Polymethylmethacrylat zum Schlagzähmodifier hängt unter anderem von der Verarbeitbarkeit des Schlagzähmodifizierungsmittels ab. Falls das Schlagzähmodifizierungsmittel thermoplastisch verarbeitet werden kann, ist der Einsatz von Polymethylmethacrylat nicht notwendig. Erfindungsgemäß umfasst die Formmasse mindestens 70 Gew.-% Schlagzähmodifierungsmittel, das mindestens eine Polyalkyl(meth)acrylat-Phase umfasst.

Das Schlagzähmodifizierungsmittel kann in an sich bekannter Weise durch Perlpolymerisation oder durch Emulsionspolymerisation erhalten werden.

Bevorzugte Schlagzähmodifizierungsmittel stellen vernetzte Teilchen mit einer mittleren Teilchengröße im Bereich von 50 bis 1000 nm, bevorzugt 60 bis 500 nm und besonders bevorzugt 80 bis300 nm dar.

Derartige Partikel können beispielsweise durch die radikalische Polymerisation von Mischungen erhalten werden, die in der Regel mindestens 40 Gew.-%, bevorzugt 50 bis 70 Gew.-% Methylmethacrylat, 20 bis 80 Gew.-%, bevorzugt 25 bis 50 Gew.-% Butylacrylat sowie 0,1 bis 2, bevorzugt 0,2 bis 1 Gew.-% eines vernetzenden Monomeren, z. B. einem mehrfunktionellen (Meth)acrylat, wie z. B. Allylmethacrylat und Comonomeren, die mit den zuvor genannten Vinylverbindungen copolymerisiert werden können.

Zu den bevorzugten Comonomeren gehören unter anderem C₁-C₄-Alkyl(meth)acrylaten, wie Ethylacrylat oder Butylmethacrylat, bevorzugt Methylacrylat, oder anderen vinylisch polymerisierbaren Monomeren wie z. B. Styrol. Die Mischungen zur Herstellung der zuvor genannten Partikel können vorzugsweise 0 bis 10, bevorzugt 0,5 bis 5 Gew.-% Comonomere umfassen.

Besonders bevorzugte Schlagzähmodifizierungsmittel sind Polymerisatteilchen, die einen zwei-, besonders bevorzugt einen dreischichtigen Kern-Schale-Aufbau aufweisen. Derartige Kern-Schale-Polymerisate sind unter anderem in EP-A 0 113 924, EP-A 0 522 351, EP-A 0 465 049 und EP-A 0 683 028 beschrieben.

Besonders bevorzugte Schlagzäh-Modifier auf Basis von Acrylatkautschuk haben unter anderem folgenden Aufbau:
- Kern:: Polymerisat mit einem Methylmethacrylatanteil von mindestens 90 Gew.-%, bezogen auf das Gewicht des Kerns.
- Schale 1:: Polymerisat mit einem Butylacrylatanteil von mindestens 70 Gew.-%, bezogen auf das Gewicht der ersten Schale.
- Schale 2:: Polymerisat mit einem Methylmethacrylatanteil von mindestens 90 Gew.-%, bezogen auf das Gewicht der zweiten Schale.

Der Kern sowie die Schalen können neben den genannten Monomeren jeweils weitere Monomere enthalten. Diese wurden zuvor dargelegt, wobei besonders bevorzugte Comonomere vernetzend wirken.

Beispielsweise kann ein bevorzugter Acrylatkautschuk-Modifier folgenden Aufbau aufweisen:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacrylat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Kern-Schale-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Derartige Schlagzähmodifier sind von der Fa. Mitsubishi unter dem Handelsnamen METABLEN® IR 441 kommerziell erhältlich. Darüber hinaus können auch schlagzäh-modifizierte Formmassen erhalten werden.

Gemäß einem besonderen Aspekt umfassen die Formmassen Schlagzähmodifizierungsmittel auf Acrylatbasis, die thermoplastisch verarbeitet werden können.

Diese thermoplastisch verarbeitbaren Schlagzähmodifizierungsmittel auf Acrylatbasis zeigen vorzugsweise eine Erweichungstemperatur gemäß Vicat B im Bereich von 60 bis 90 °C auf.

Die thermoplastisch verarbeitbaren Schlagzähmodifizierungsmittel auf Acrylatbasis weisen bevorzugt ein E-Modul gemäß ISO 527-2 im Bereich von 700 bis 1500 MPa, besonders bevorzugt im Bereich von 800 bis 1200 MPa auf. Die Kerbschlagzähigkeit bevorzugter schlagzäher Polyalkyl(meth)acrylate gemäß Charpy, ISO 179: 1993 (179/1eU) ist vorzugsweise größer oder gleich 70 kJ/m² wobei die Kerbschlagzähigkeit besonders bevorzugt größer 80 kJ/m² ist.

Bevorzugte thermoplastisch verarbeitbaren Schlagzähmodifizierungsmittel auf Acrylatbasis sind durch Substanz-oder einer Perlpolymerisation in wäßrigem Medium erhältlich.

Bevorzugte thermoplastisch verarbeitbaren Schlagzähmodifizierungsmittel auf Acrylatbasis sind an sich bekannt, wobei diese Copolymere durch Verfahren erhältlich sind, die unter anderem in die DE-OS 1 645 232 und DE-OS 33 29 765 beschrieben sind.

Hierbei wird erfindungsgemäß in einer ersten Stufe eine Hartphase A) mit einer Glastemperatur Tg >25°C bestehend aus 70 bis 100 Gew.-% Methylmethacrylat (MMA) und 0 bis 30 Gew.-% eines Acrylsäureesters eines C₁- bis C₈-Alkohols bzw. eines Methacrylsäureesters eines C₂- bis C₈-Alkohols und 0 bis 10 Gew.-% eines oder mehrerer anderer, mit den genannten Estern copolymerisierbarer Vinylmonomerer polymerisiert.

In einer zweiten Stufe werden die Monomeren der Zähphase B) zugegeben und polymerisiert. Die Polymere der Zähphase B) besitzen, unabhängig von der Existenz der Hartphase betrachtet, eine Glastemperatur Tg von <25°C, vorzugsweise <10°C.

Bevorzugt erfolgt die Polymerisation der Hartphase A) in erster Stufe in Gegenwart a) eines öllöslichen Radikal-Initiators und b) eines organischen Schwefelreglers mit mindestens zwei Thiolgruppen im Molekül.

Gemäß einem bevorzugten Aspekt wird die Polymerisation der Zähphase B) in Anwesenheit der Hartphase A) durchgeführt, indem man die Monomeren in die vorgebildete Hartphase A) einquellen läßt und die Polymerisation der Monomeren der Zähphase somit im wesentlichen innerhalb der vorgebildeten Hartphase erfolgt. Besonders vorteilhaft ist es dabei, die Polymerisation mit Hilfe des noch in der Hartphase vorhandenen Restinitiators durchzuführen.

Die Glasübergangstemperatur (Tg) kann z.B. der Literaturstelle Brandrup und E.H. Immergut, "Polymer Handbook", Interscience 1966, pIII-61 bis III-63, oder dem "Kunststoff-Handbuch", Band IX, Herausgeber R.Vieweg und F.Esser, Carl-Hanser-Verlag, München 1975, S. 333-339 und T.G. Fox in "Bull.Am.Physics soc, Vol. I, (3) p 123 (1956) entnommen werden. Des Weiteren kann die Glasübergangstemperatur der Hartphase A) bzw. der Zähphase B) jeweils durch DSC bestimmt werden.

Die Glastemperatur Tg der in Stufe A) polymerisierten Hartphase unabhängig von der Zähphase betrachtet) liegt in der Regel oberhalb 25°C, vorzugsweise bei 60°C und darüber.

Diese Werte werden durch Anwendung von 70 bis 100 Gew.-% Methylmethacrylat erreicht, wobei 0 bis 30 Gew.-% eines Acrylsäureesters eines C₁ bis C₈-Alkohols bzw. eines Methacrylsäureesters eines C₂- bis C₈-Alkohols copolymerisiert werden können.

Als Beispiele für Alkylester der Acrylsäure seien Methyl-acrylat, Ethylacrylat, Propylacrylat, Isopropylacrylat, Butylacrylat, insbesondere n-Butyl- und Isobutylacrylat, n-Hexylacrylat und 2-Ethylhexylacrylat sowie Neopentylacrylat genannt.

Als Beispiele für Alkylester der Methacrylsäure mit C₂- bis C₈-Alkoholen seien Ethylmethacrylat, n-Propylmethacrylat, Butylmethacrylat, insbesondere n-Butylmethacrylat genannt.

Die genannten Ester können auch in Form von Gemischen angewendet werden.
Beispiele für andere Vinylmonomere, die in Anteilen von 0 bis 10 Gew.-% mit den genannten Estern copolymerisiertar sind, wurden zuvor näher dargelegt. Bevorzugt werden aromatische Vinylverbindungen wie z.B. Styrol und dessen Derivate wie α-Methylstyrol, p-Methylstyrol, sowie Vinylester von aromatischen oder aliphatischen Carbonsäuren wie z.B. Vinylacetat, Vinylbenzoat sowie Acrylnitril und Methacrylnitril verwendet.

Die Monomeren der Zähphase B) sind dahingehend definiert, daß sie als Homo- oder Copolymerisate (unabhängig von der Hartphase) eine Glasübergangstemperatur Tg von<25°C, vorzugsweise <10°C, aufweisen. Als Ester der Methacrylsäure kommen die oben genannten Ester von C₂-bis C₈-Alkoholen als Ester der Acrylsäure diejenigen von C₁.- bis C₈-Alkoholen auch in Form von Mischungen in Frage.

Die bevorzugt eingesetzten Schwefelregler mit mindestens zwei Thiolgruppen im Molekül enthalten im allgemeinen mindestens 2, vorzugsweise mindestens 6 Kohlenstoffatome im Molekül, im allgemeinen jedoch nicht über 40. Vorteilhaft ist z.B. die Anwesenheit eines oder vorzugsweise mehrerer α-Mercapto-carbonsäureester im Molekül, vorzugsweise ausgehend von z.B. Polyolen, wie dem Glykol, dem Propandiol, dem Glycerin, dem Pentaerythrit u.a., genannt sei insbesondere das Pentaerythrit-tetrathio-glykolat. Die Schwefelregler mit mindestens 2 Thiolgruppen im Molekül können teilweise durch die Formel (I)

HS-CH₂-A-CH₂-SH (I),

worin A für eine Kohlenwasserstoffkette mit 3 bis 16 Kohlenstoffatomen, insbesondere eine Kohlenwasserstoffkette mit 4 bis 8 Kohlenstoffatomen oder einen Rest 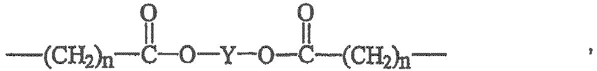 worin n 0 oder eine Zahl von 1 bis 8, insbesondere 0 und 1 bis 5 bedeutet und Y für eine Kohlenwasserstoffkette mit 2 bis 16 Kohlenstoffatomen steht, die gegebenenfalls mit Einheiten 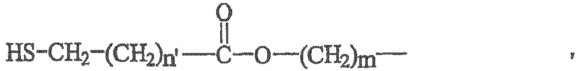 worin n' die gleiche Bedeutung wie n besitzt und m für 0 oder eine Zahl von 1 bis 8 steht, substituiert ist, wiedergegeben werden.
Falls ein organischer Schwefelregler eingesetzt wird, beträgt dessen Gehalt bei der Polymerisation der Hartphase in Stufe A) im allgemeinen 0,05 bis 5 Gew.-%, vorzugsweise 0,1 bis 2 Gew.-%, bezogen auf die Hartphase A).

Als öllösliche (wasserunlösliche) Radikalinitiatoren a) kommen beispielsweise peroxidische und Azoverbindungen dieses Typs infrage (US-PS 2 471 959). Genannt seien z.B. organische Peroxide wie Dibenzoylpercxid, Laurylperoxid oder Perester wie t-Butyl-per-2-ethylhexanoat, ferner Azoverbindungen wie Azoisobutyronitril u.a. bekannte Initiatoren dieses Typs. Radikalbildner mit höheren Zerfallstemperaturen können zusätzlich verwendet werden, wenn z.B. gegen Reaktionsende die Temperatur gesteigert wird, um möglichst vollständige Polymerisation zu erreichen.

Der Anteil der öllöslichen Radikal-Initiatoren beträgt im allgemeinen 0,01 bis 5 Gew.-%, vorzugsweise 0,2 bis 3 Gew.-%, besonders bevorzugt 0,5 bis 2,5 Gew.-%, bezogen auf die Monomeren der Stufe A).

Unter den vorzugsweise in Stufe B) zur Anwendung kommenden Pfropfvernetzern seien entweder Monomere mit mindestens zwei polymerisationsfähigen Einheiten, aber unterschiedlicher Reaktivität im Molekül oder Monomeren mit mindestens drei gleichartigen polymerisationsfähigen Einheiten im Molekül verstanden (wobei sich die unterschiedliche Reaktivität der an sich gleichartigen polymerisationsfähigen Einheiten, im letzteren Fall vermutlich durch die im Verlauf der Polymerisation eintretende sterische Hinderung der verbleibenden polymerisationsfähigen Einheiten erklären läßt).

Beide Pfropfvernetzer-Typen (also Monomere mit mindestens zwei polymerisationsfähigen Einheiten aber unterschiedlicher Reaktivität im Molekül und Monomere mit wenigstens drei gleichartigen polymerisationsfähigen Einheiten im Molekül) verbessern die Klarheit der schlagzähen Formmassen. Diese Pfropfvernetzer-Typen verbessern im Vergleich zu anderen Vernetzern wie z.B. Butandioldimethacrylat die thermoplastische Verarbeitbarkeit (z.B. die Extrudierbarkeit) des Materials.

Die zuvor dargelegten, bevorzugt eingesetzten Pfropfvernetzer mit mindestens zwei polymerisationsfähigen Einheiten, aber unterschiedlicher Reaktivität können durch die allgemeine Formel II dargestellt werden 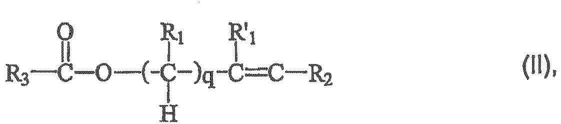 worin R₁ und R₂ für Wasserstoff und für Methyl, R₃ für einen Rest 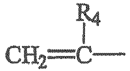 oder einen Rest 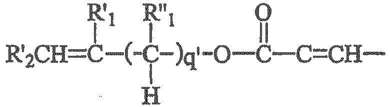 steht, worin R₄ Wasserstoff oder Methyl bedeutet und q und q' für null oder eins und R'₁, R"₁ und R'₂ die gleichen Bedeutungen wie R₁ bzw. R₂ besitzen.

Genannt seien z.B. die Allyl-, Methallyl- und Crotylester α,ß-ungesättigter Carbonsäuren wie Allylmethacrylat und Allylacrylat sowie die entsprechenden Methallyl-, Crotyl -und Vinylester. Als Beispiel für Pfropfvernetzer mit drei gleichartigen polymerisationsfähigen Einheiten im Molekül sei Trimethylolpropantriacrylat genannt.

Neben den Polyalkyl(meth)acrylaten können die Formmassen weitere Polymere aufweisen. Hierzu gehören Polyacrylnitrile, Polystyrole, Polyether, Polyester, Polycarbonate, Polyvinylchloride. Hierbei sind Polyalkyl(meth)acrylate. Diese Polymere können einzeln sowie als Mischung eingesetzt werden. Des weiteren können diese Polymere auch in Form von Copolymeren vorliegen.

Falls die Formmassen diffus ausgestattet werden sollen, so weisen die Perlpolymerisate einen vom Matrixpolymer unterschiedlichen Brechungsindex n_{D} bei 20°C auf. Hierbei wird die Differenz zwischen dem Brechungsindex der Matrixpolymere und dem Brechungsindex der Perlpolymerisate bei der Na-D-Linie (589 nm) und bei 20°C gemessen. Bevorzugte diffuse Ausgestaltungen der erfindungsgemäßen Formmassen weisen eine Differenz des Brechungsindexes von mindestens 0,01. Je größer die Differenz, desto geringer kann der Anteil der Perlpolymerisate in der Formmasse gewählt werden, um gleiche Streueigenschaften zu erhalten.

Essentiell für eine diffuse Ausstattung ist die Differenz beider Brechungsindizes. Dementsprechend kann der Brechungsindex der Matrixpolymere größer oder kleiner als der Brechungsindex der Perlpolymerisate sein. Zur Einstellung des Brechungsindexes können bekannte Methoden eingesetzt werden. Beispielsweise können bei der Herstellung der Matrixpolymere oder der Perlpolymerisate Monomere copolymerisiert werden, die Schwefelatome enthalten.

Wird eine klare Optik erwünscht, so kann der Brechungsindex der Formmasse an den Brechungsindex der Perlpolymerisate angepasst werden, wobei auch eine Anpassung der Perlpolymerisate möglich ist. Dies kann ebenfalls durch Wahl der Comonomere erfolgen.

Der Anteil der Perlpolymerisate in der Formmasse ist abhängig von dem erwünschten Grad an Spannungsrißbeständigkeit sowie der zu erzielenden Oberflächenrauhigkeit.

Im allgemeinen können die Formmassen 0,1 Gew.-% bis 50 Gew.-%, vorzugsweise 1 Gew.-% bis 40 Gew.-% und besonders bevorzugt 10 Gew.-% bis 25 Gew.-% Perlpolymerisate, bezogen auf das Gesamtgewicht der Formmasse, enthalten, ohne daß hierdurch eine Beschränkung erfolgen soll.

Erfindungsgemäße Formmassen umfassen
a) mindestens mindestens 70 Gew.- Teile Schlagzähmodifierungsmittel, das mindestens eine Polyalkyl(meth)acrylat-Phase umfasst,
b) mindestens 8 Gew.-% Polyalkyl(meth)acrylat-Perlpolymerisate mit einer mittleren Teilchengröße V₅₀ im Bereich von 30 bis 70 µm und
c) 5 bis 20 Gew.-% Polyalkyl(meth)acrylate, bevorzugt Polymethylmethacrylate, mit einem Molekulargewicht im Bereich von 20000 bis 350000 g/mol, wobei die Gew.-% der Komponenten a) bis c) 100 Gew.-% ergeben,
dadurch gekennzeichnet, dass das Schlagzähmodifierungsmittel durch eine mindestens zweistufige Polymerisation erhältlich ist, wobei in einer ersten Stufe eine Hartphase A) mit einer Glastemperatur Tg >25°C umfassend mindestens 70 Gew.-% Methylmethacrylat hergestellt wird und nachfolgend in einer zweiten Stufe Monomere der Zähphase B), deren Polymerisate eine Glastemperatur Tg von <25°C besitzen, zugesetzt werden und die Polymerisation zu Ende geführt wird.

Gemäß einem weiteren Aspekt der vorliegenden Erfindung umfassen besonders bevorzugt einsetzbare Formmassen
a) mindestens 70 Gew.-% Schlagzähmodifierungsmittel, das mindestens eine Polyalkyl(meth)acrylat-Phase umfasst,
b) mindestens 8 Gew.-% Polyalkyl(meth)acrylat-Perlpolymerisate mit einer mittleren Teilchengröße V₅₀ im Bereich von 30 bis 70 µm,
c) 5 bis 20 Gew.-% Polyalkyl(meth)acrylate, bevorzugt Polymethylmethacrylate, mit einem Molekulargewicht im Bereich von 20000 bis 350000 g/mol und
d) 0 bis 40 Gew.-%, bevorzugt 0,1 bis 20 Gew.-% Additive, jeweils bezogen auf das Gesamtgewicht der Formmasse,
dadurch gekennzeichnet, dass das Schlagzähmodifierungsmittel durch eine mindestens zweistufige Polymerisation erhältlich ist, wobei in einer ersten Stufe eine Hartphase A) mit einer Glastemperatur Tg >25°C umfassend mindestens 70 Gew.-% Methylmethacrylat hergestellt wird und nachfolgend in einer zweiten Stufe Monomere der Zähphase B), deren Polymerisate eine Glastemperatur Tg von <25°C besitzen, zugesetzt werden und die Polymerisation zu Ende geführt wird.

Besonders bevorzugt werden thermoplastisch verarbeitbare Schlagzähmodifizierungsmittel auf Acrylatbasis verwendet, die insbesondere durch die zuvor dargelegte Perlpolymerisation erhältlich sind.

Die Formmassen können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Durch die Formmassen sind Formkörper mit einer matten Oberfläche erhältlich, die hervorragende Eigenschaften aufweisen. Besonders bevorzugte Formkörper umfassen mindestens 80 Gew-%, besonders bevorzugt mindestens 90 Gew-% der zuvor beschriebenen Formmasse.

Aus den zuvor beschriebenen Formmassen können durch bekannte Verfahren, wie beispielsweise Spritzguß oder Extrusion Formkörper erhalten werden, die beispielsweise in der Möbelindustrie Verwendung finden können.

Die Dicke des Formkörpers ist von der Anwendung abhängig. So können die erfindungsgemäßen Formmassen zu Folien extrudiert werden. Des weiteren können die Formmassen zu Platten mit den üblichen Maßen geformt werden. Besondere Ausgestaltungen der erfindungsgemäßen Formkörper weisen eine Dicke im Bereich von 0,05 mm bis 50 mm, vorzugsweise 0,1 bis 25 mm auf.

Die erfindungsgemäßen Formkörper zeigen hervorragende mechanische und thermische Eigenschaften. Des weiteren zeigen die Formkörper eine hervorragende Spannungsrissbeständigkeit.

Gemäß einer besonderen Ausführungsform der vorliegenden Erfindung können die Formkörper einer mittlere Oberflächenrauhigkeit R_{z} im Bereich von 5µ bis 70µ, insbesondere 5 bis 50µ aufweisen.

Die mittlere Oberflächenrauhigkeit R_{Z} kann gemäß DIN 4768 mit einem Messgerät Talysurf 50 der Fa. Taylor Hobson bestimmt werden, wobei R_{Z} die gemittelte Rautiefe ist, die sich aus den Mittelwerten der Einzelrautiefen von fünf aufeinander folgender Einzelmessstrecken im Rauheitsprofil ergibt.

Der E-Modul besondere Ausführungsformen der erfindungsgemäßen Formkörper ist vorzugsweise größer oder gleich 1000 MPa, besonders bevorzugt größer oder gleich 1100 MPa gemessen gemäß ISO 527-2 (1 mm/min; 23°C). Der E-Modul kann unter anderem durch Erhöhung des Anteils an Polyalkyl(meth)acrylat-Perlpolymerisaten bzw. Polyalkyl(meth)acrylate mit einem Molekulargewicht im Bereich von 20000 bis 350000 g/mol erhöht werden.

Die Kerbschlagzähigkeit gemäß Charpy, ISO 179, 1993 (Charpy 179/1 eU, bei 23°C) bevorzugter Formkörper beträgt vorzugsweise mindestens 4,5 kJ/m², besonders bevorzugt mindestens 5,5 kJ/m². Die Kerbschlagzähigkeit kann unter anderem durch Erhöhung des Anteils an Schlagzähmodifizierungsmittel erhöht werden.

Die Erweichungstemperatur gemäß Vicat, ISO 306, Aug. 1994 (16h/80°C; B50; Mini-Vicat-Anlage) beträgt vorzugsweise mindestens 75°C, besonders bevorzugt mindestens 85°C.

Nachfolgend wird die Erfindung durch Beispiele eingehend erläutert, ohne dass die Erfindung hierauf beschränkt werden soll.

### A) Messmethoden

Die thermischen Eigenschaften wurden gemäß Vicat mit der Mini-Vicat-Anlage Prüfnorm ISO 306, Aug. 1994 (16h/80°C; Verfahren B50) bestimmt.

Der E-Modul wurde gemäß ISO 527-2 bestimmt ((1 mm/min; 23°C).

Die Streckdehnung, die Streckspannung und die nominelle Bruchdehnung wurden gemäß ISO 527 bei 23°C bestimmt.

Die Oberflächenrauhigkeit wurde an Formkörpern mit einer Dicke von 3 mm gemessen. Rauheitsgrößen Ra, Rz und Rmax wurden nach DIN 4768 bestimmt, wobei folgende cut off-Werte verwendet wurden: Ra Werte <2 µm werden mit einem cut off von 0,8 mm, bei Ra größer 2 µm mit einem cut off von 2,5 mm ermittelt. Die Rauheitsmessungen wurden mit dem Messgerät Talysurf 50 durchgeführt (Hersteller: Rank Taylor Hobson GmbH).

Die Spannungsrissbeständigkeit wurde durch vollständiges Eintauchen des Formkörpers für 5 Minuten in eine Ethanol-Wasser-Mischung (Volumenverhältnis: 90/10) bei 23°C bestimmt, wobei die entstandenen Risse visuell beurteilt wurden. Hierzu wurden Formkörper mit einer Dicke von 3 mm, mit einer Breite von 3,5 cm und einer Länge von 55cm extrudiert. Die Formkörper wurden gebogen und in einen Behälter (Durchmesser 18,7 cm, Höhe 10 cm) gelegt, der mit Ethanol-Wasser-Mischung gefüllt war. Die Spannungsrissbeständigkeit wurde nach folgendem Schema beurteilt:

| | |
|---|---|
| - | Falls viele Brüche auftraten |
| o | Falls bis zu 2 Brüche auftraten |
| + | Falls keine Brüche auftraten |

### B) Herstellung der Kunststoffartikel A

Zur Herstellung von sphärischen Kunststoffpartikeln wurde ein Aluminiumhydroxid-Pickering-Stabilisator verwendet, der durch Fällung aus Aluminiumsulfat und Sodalösung (1 N Natriumcarbonat-Lösung) unmittelbar vor Beginn der eigentlichen Polymerisation hergestellt wurde. Hierzu wurden zunächst 38 L ention. Wasser, 400 g Aluminiumsulfat und 8 g Komplexbildner (Trilon A) unter Rühren (330 Upm) mit einem Impellerrührer in einem mit N₂ gespülten 100 L V4A-Kessel mit Wellenbrecher, Ni-Cr-Ni-Thermoelement und Umlaufheizung vorgelegt. Im Anschluss erfolgt die Zugabe von 1760 g Sodalösung zur Fällung des Aluminiumhydroxids, sowie die Zugabe der Hilfsverteiler Emulgator K30 (4 g) erhältlich von der Fa. Bayer AG (Natriumsalz eines C15-Paraffinsulfonats) und Polywachs 5000/6000 (4 g) erhältlich von der Fa. Höchst (Polyethylenglycol mit einem Molgewicht im Bereich von 5000-6000), jeweils gelöst in 240 ml ention. Wasser. Der pH-Wert lag im Anschluss an die Fällung bei ca. 5,3, wodurch eine kolloidale Verteilung des Stabilisators im Wasser erzielt wurde.

Ebenfalls bei Raumtemperatur erfolgt danach die Zugabe einer Monomermischung bestehend aus 6900 g Methylmethacrylat, 3000 g Styrol, 100 g Glycoldimethacrylat, 200 g Dilauroylperoxyd, 20 g tert.-Butylper-2-ethylhexanoat und 50 g 2-Ethylhexylthioglycolat.

Es erfolgt die Aufheizphase bis auf eine Temperatur von 80°C, wobei bei einer Kesselinnentemperatur von 40°C der Reaktor druckdicht verschlossen und die N₂-Einleitung abgestellt wurde. In den nächsten 115 Minuten steigt die Innentemperatur bis auf ca. 87°C an und der Druck erhöht sich von 0,70 auf 0,92 bar. Nach dem Temperaturmaxima wurde das Reaktionsgemisch auf ca. 87-88°C aufgeheizt und bei dieser Temperatur ca. eine Stunde nachgerührt, wobei die Rührgeschwindigkeit auf 200 Upm verringert wurde. Nachdem das Reaktionsgemisch abgekühlt wurde, wurde bei einer Temperatur von 46°C der Kessel entspannt und anschließend 400 ml 50%iger Schwefelsäure zugegeben, wodurch das Aluminiumhydroxid ins lösliche Aluminiumsulfat überführt wird und dadurch das Suspensionspolymerisat ausfällt. Zur Aufarbeitung der Perlen wurde die erhaltene Suspension über eine Steinzeugnutsche mit Filtertuch filtriert, neutral gewaschen und bei 50°C ca. 20 Stunden im Wärmeschrank getrocknet.

Die Größenverteilung wurde durch Laserextinktionsverfahren untersucht. Die Teilchen wiesen eine mittlere Größe V₅₀ von 40,5 µm auf. Die Perlen hatten eine sphärische Form, wobei keine Fasern festgestellt werden konnten. Koagulation trat nicht auf. Im folgenden werden die so erhaltenen Partikel mit Kunststoffpartikel A bezeichnet.

### C) Beispiele 1 bis 6 sowie Vergleichsbeispiel 1

Es wurden verschiedene Formkörper durch Extrusion hergestellt. Hierzu wurden verschiedene Compounds in einem Extruder gemischt, wobei die Zusammensetzungen der Compounds in Tabelle 1 dargelegt sind. Die Compounds umfassen die zuvor dargelegten Kunststoffpartikel A, Schlagzähmodifier (hergestellt gemäß DE-OS 3329765; umfassend 57,6 Gew.-% einer Hartphase aus 98,3 Gew.-% Methylmethacrylat und 1,7 Gew.-% Methylacrylat sowie 42,4 Gew.-% einer Zähphase aus 42,4 Gew.-% Butylacrylat, 16 Gew.-% Styrol, 5,8 Gew.-% Methylmethacrylat und 1,4 Gew.-% Allylmethacrylat erhältlich von der Firma Röhm GmbH und Co. KG) eine von der Firma Röhm GmbH und Co. KG erhältliche PMMA-Formmasse (Copolymer aus 96 Gew-% Methylmethacrylat und 4 Gew-% Methylacrylat) sowie Palmitinsäure (erhältlich von Fa. Merck, Darmstadt). Die Prozent-Angaben in Tabelle 1 beziehen sich auf das Gewicht der Compounds.

Zur Extrusion wurde ein Einschneckenextruder (Ø 30er) der Firma Stork eingesetzt, wobei die Temperatur der Schmelze beim Düsenaustritt im Allgemeinen 240 C° betrug.

Die erhaltenen Formkörper wurden gemäß den zuvor beschriebenen Methoden untersucht. Die erhaltenen Daten sind in Tabelle 1 dargelegt.

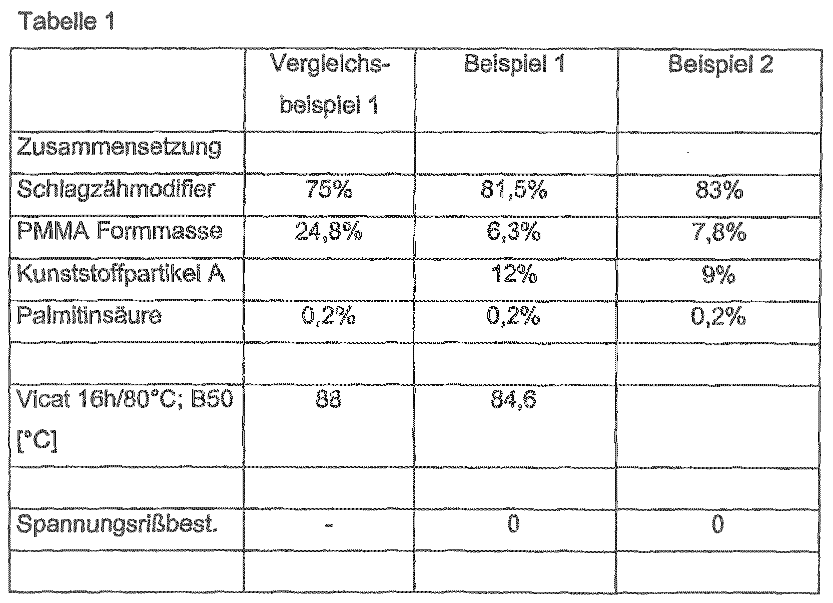

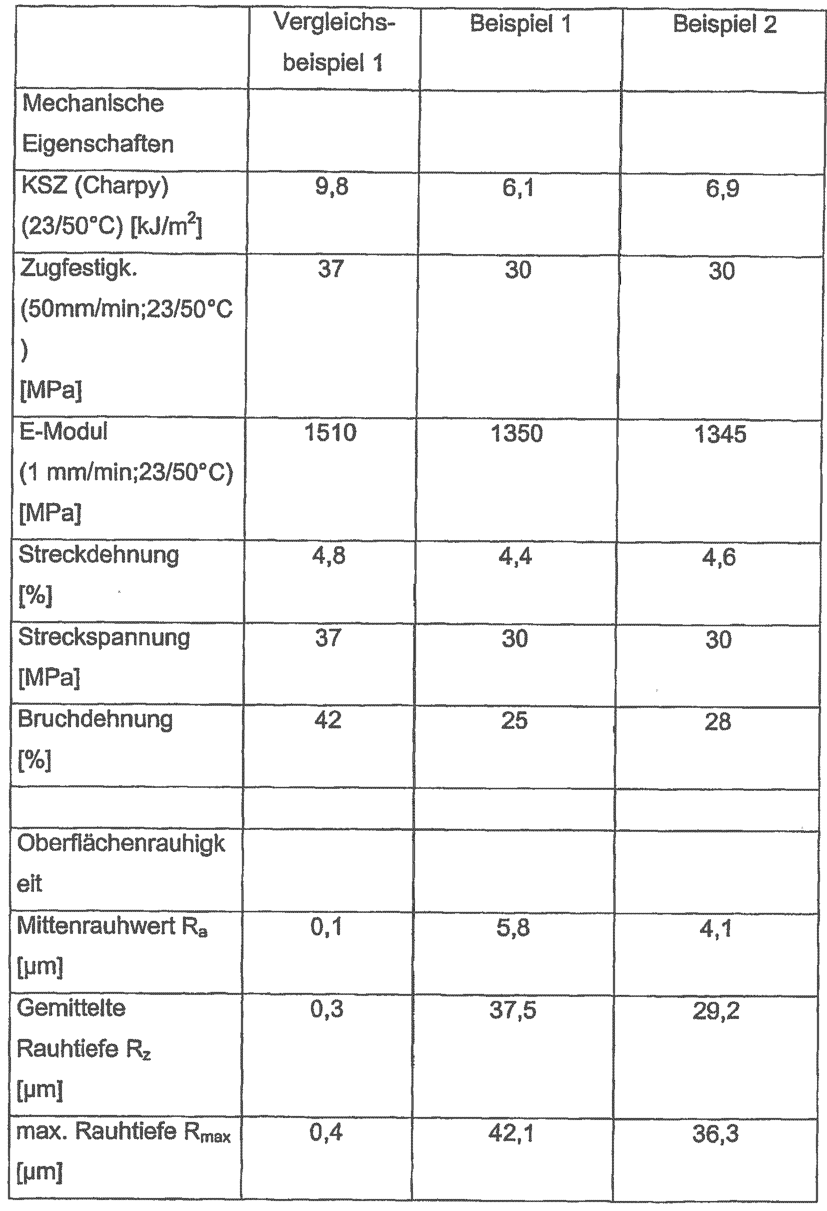

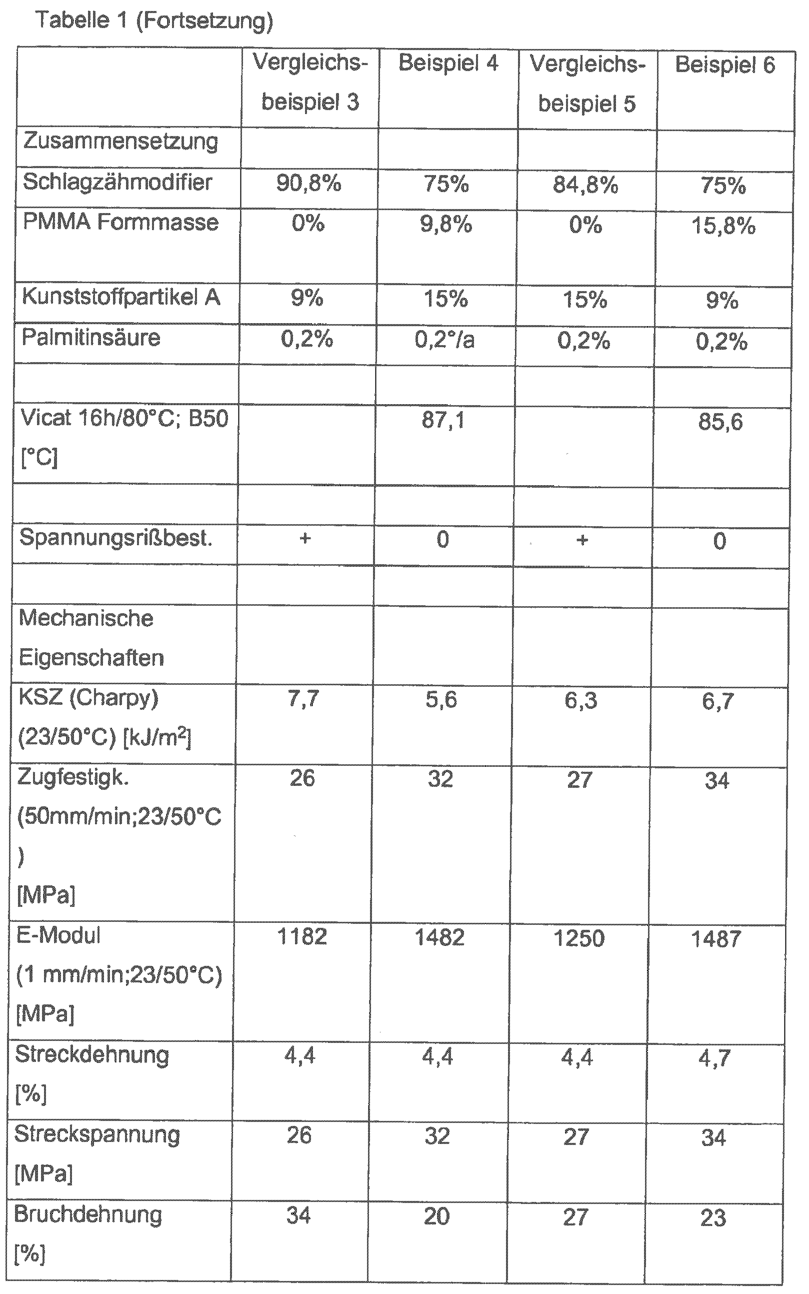

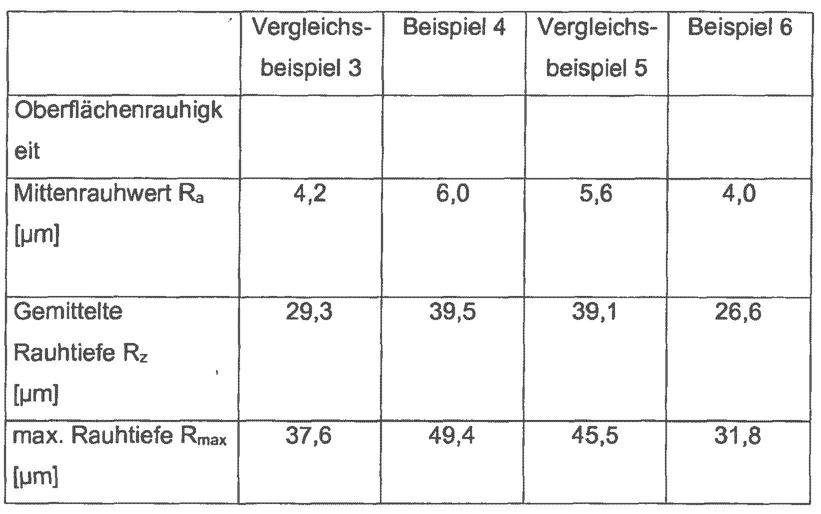

Überraschend zeigt sich, dass durch den Einsatz des Mattierungsmittels Formkörper mit einer hohen Spannungsrissbeständigkeit, einer hervorragenden Kerbschlagzähigkeit sowie einem hohen E-Modul und einer hohen Vicat-erweichungstemperatur erhalten werden können. Die Verbesserung der Spannungsrissbeständigkeit durch die Verwendung von Polyalkyl(meth)acrylat-Perlpolymerisaten ergibt sich insbesondere auch aus dem Vergleich des Vergleichsbeispiels 5 mit den Beispielen 1, 2 und 6.

## Patentansprüche

1. Verwendung von Polyalkyl(meth)acrylat-Perlpolymerisaten mit einer mittleren Teilchengröße V₅₀ im Bereich von 30 bis 70 µm zur Verbesserung der Spannungsrissbeständigkeit von Polyalkyl(meth)acrylat umfassenden Formmassen, **dadurch gekennzeichnet, dass** die Formmasse mindestens 80 Gew.-% Polyalkyl(meth)acrylate umfasst.

2. Verwendung gemäß Anspruch 1, **dadurch gekennzeichnet, dass** die Polyalkyl(meth)acrylat umfassenden Formmassen mindestens einen Schlagzähmodifier enthalten.

3. Verwendung gemäß mindestens einem der vorhergehenden Ansprüche, **dadurch gekennzeichnet, dass** die Polyalkyl(meth)acrylate der Formmasse durch Polymerisation von Monomermischungen erhältlich sind, die mindestens 20 Gew.-% Methylmethacrylat, bezogen auf die Monomere, umfassen.

4. Verwendung gemäß mindestens einem der vorhergehenden Ansprüche, **dadurch gekennzeichnet, dass** ein Teil der Polyalkyl(meth)acrylate Copolymere mit schlagzähmodifizierender Wirkung sind.

5. Verwendung gemäß mindestens einem der vorhergehenden Ansprüche, **dadurch gekennzeichnet, dass** ein Teil der Polyalkyl(meth)acrylate durch Polymerisation von Monomermischungen erhältlich sind, die mindestens 90 Gew.-% Methylmethacrylat, bezogen auf die Monomere, umfassen.

6. Verwendung gemäß mindestens einem der vorhergehenden Ansprüche, **dadurch gekennzeichnet, dass** zumindestens ein Teil der Polyalkyl(meth)acrylat-Perlpolymerisate vernetzt sind.

7. Verwendung gemäß mindestens einem der vorhergehenden Ansprüche, **dadurch gekennzeichnet, dass** die Polyalkyl(meth)acrylat-Perlpolymerisate durch Polymerisation von Monomermischungen erhältlich sind, die mindestens 50 Gew.-% Methylmethacrylat, bezogen auf das Gewicht der Monomere, umfassen.

8. Verwendung gemäß mindestens einem der vorhergehenden Ansprüche, **dadurch gekennzeichnet, dass** die Polyalkyl(meth)acrylat-Perlpolymerisate durch Polymerisation von Monomermischungen erhältlich sind, die mindestens 0,5 Gew.-% vernetzende Monomere, bezogen auf das Gewicht der Monomere, umfassen.

9. Verwendung gemäß mindestens einem der vorhergehenden Ansprüche, **dadurch gekennzeichnet, dass** dio Polyalkyl(meth)acrylat-Perlpolymerisate einen von der Polyalkyl(meth)acrylat umfassenden Formmasse unterschiedlichen Brechungsindex n_{D} bei 20°C aufweisen.

10. Verwendung gemäß Anspruch 9, **dadurch gekennzeichnet, dass** die Differenz zwischen dem Brechungsindiz der Polyalkyl(meth)acrylat umfassenden Formmasse und dem Brechungsindex der Perlpolymerisate gemessen bei der Na-D-Linie (589 nm) und bei 20°C mindestens 0,01 beträgt.

11. Verwendung gemäß mindestens einem der vorhergehenden Ansprüche, **dadurch gekennzeichnet, dass** die Formmassen mindestens 5 Gew.-% Polyalkyl(meth)acrylat-Peripolymerisaten umfassen.

12. Formmasse umfassend
a) mindestens 70 Gew.-% Schlagzähmodifierungsmittel, das mindestens eine Polyalkyl(meth)acrylat-Phase umfasst,
b) mindestens 8 Gew.-% Polyalkyl(meth)acrylat-Perlpolymerisate mit einer mittleren Teilchengröße V₅₀ im Bereich von 30 bis 70 µm und
c) 5 bis 20 Gew.-% Polyalkyl(meth)acrylate mit einem Molekulargewicht im Bereich von 20000 bis 350000 g/mol, wobei die Gew.-% der Komponenten a) bis c) 100 Gew.-% ergeben,
**dadurch gekennzeichnet, dass** das Schlagzähmodifierungsmittel durch eine mindestens zweistufige Polymerisation erhältlich ist,
wobei in einer ersten Stufe eine Hartphase A) mit einer Glastemperatur Tg >25°C umfassend mindestens 70 Gew.-% Methylmethacrylat hergestellt wird und nachfolgend in einer zweiten Stufe Monomere der Zähphase B), deren Polymerisate eine Glastemperatur Tg von <25°C besitzen, zugesetzt werden und die Polymerisation zu Ende aeführt wird.

13. Formmasse gemäß Anspruch 12, **dadurch gekennzeichnet, dass** das Schlagzähmodifierungsmittel eine Polyalkyl(meth)acrylat-Phase mit einer Glasübergangstemperatur Tg größer 25°C umfasst.

14. Formmasse gemäß Anspruch 12, **dadurch gekennzeichnet, dass** das Schlagzähmodifierungsmittel thermoplastisch verarbeitet werden kann.

15. Formmasse gemäß mindestens einem der Ansprüche 12 bis 14, **dadurch gekennzeichnet, dass** das Schlagzähmodifierungsmittel durch Perlpolymerisation erhältlich ist.

16. Formmasse gemäß Anspruch 12, **dadurch gekennzeichnet, dass** die Polymerisation der Hartphase A) in der ersten Stufe in Gegenwart a) eines öllöslichen Radikal-Initiators und b) eines organischen Schwefelreglers mit mindestens zwei Thiolgruppen im Molekül erfolgt.

17. Formmasse gemäß Anspruch 12 oder 16, **dadurch gekennzeichnet, dass** die Polymerisation der Monomeren der Zähphase B) in der zweiten Stufe unter Verwendung von Pfropfvernetzern in Anwesenheit der zuerst gebildeten Hartphase erfolgt.

18. Formkörper umfassend eine Formmasse gemäß mindestens einem der Ansprüche 12 bis 17.

19. Formkörper gemäß Anspruch 18, **dadurch gekennzeichnet, dass** der Formkörper mindestens 80 Gew.-% Formmasse gemäß mindestens einem der Ansprüche 12 bis 17 aufweist.

20. Formkörper gemäß Anspruch 18 oder 19, **dadurch gekennzeichnet, dass** der Formkörper hergestellt durch Extrusion mit einer Dicke von 3 mm, Breite von 3,5 cm und Länge von 55 cm, im gebogenen Zustand bei 23 °C in eine Ethanol-Wasser-Mischung (Volumenverhältnis: 90/10) nach 5 Minuten höchstens 4 Brüche, bevorzugt weniger 3 Brüche aufweist.

21. Formkörper gemäß mindestens einem der Ansprüche 18 bis 20, **dadurch gekennzeichnet, dass** der Formkörper ein E-Modul gemäß ISO 527-2 größer oder gleich 1000 MPa aufweist.

22. Formkörper gemäß mindestens einem der Ansprüche 18 bis 21, **dadurch gekennzeichnet, dass** der Formkörper eine Erweichungstemperatur gemäß Vicat größer oder gleich 75°C aufweist.

23. Formkörper gemäß mindestens einem der Ansprüche 18 bis 22, **dadurch gekennzeichnet, dass** der Formkörper eine mittlere Oberflächenrauhigkeit Rz der Platte im Bereich von 4 bis 70 µm aufweist.

## Claims

1. Use of polyalkyl (meth) acrylate bead polymers whose median particle size V₅₀ is in the range from 30 to 70 µm for improvement of the stress cracking resistance of polyalkyl (meth)acrylate-containing moulding compositions, **characterized in that** the moulding composition encompasses at least 80% by weight of polyalkyl (meth)acrylates.

2. Use according to Claim 1, **characterized in that** the polyalkyl (meth)acrylate-containing moulding compositions comprise at least one impact modifier.

3. Use according to at least one of the preceding claims, **characterized in that** the polyalkyl (meth)acrylates of the moulding composition are obtainable via polymerization of monomer mixtures which encompass, based on the monomers, at least 20% by weight of methyl methacrylate.

4. Use according to at least one of the preceding claims, **characterized in that** some of the polyalkyl (meth)acrylates are copolymers with impact-modifying action.

5. Use according to at least one of the preceding claims, **characterized in that** some of the polyalkyl (meth)acrylates are obtainable via polymerization of monomer mixtures which encompass, based on the monomers, at least 90% by weight of methyl methacrylate.

6. Use according to at least one of the preceding claims, **characterized in that** at least some of the polyalkyl (meth)acrylate bead polymers have been crosslinked.

7. Use according to at least one of the preceding claims, **characterized in that** the polyalkyl (meth)acrylate bead polymers are obtainable via polymerization of monomer mixtures which encompass, based on the weight of the monomers, at least 50% by weight of methyl methacrylate.

8. Use according to at least one of the preceding claims, **characterized in that** the polyalkyl (meth)acrylate bead polymers are obtainable via polymerization of monomer mixtures which encompass, based on the weight of the monomers, at least 0.5% by weight of crosslinking monomers.

9. Use according to at least one of the preceding claims, **characterized in that** the polyalkyl (meth)acrylate bead polymers have a refractive index n_{D} at 20°C which differs from that of the polyalkyl (meth)acrylate-containing moulding composition.

10. Use according to Claim 9, **characterized in that** the difference between the refractive index of the polyalkyl (meth)acrylate-containing moulding composition and the refractive index of the bead polymers, measured at the Na D line (589 nm) and at 20°C, is at least 0.01.

11. Use according to at least one of the preceding claims, **characterized in that** the moulding compositions encompass at least 5% by weight of polyalkyl (meth)acrylate bead polymers.

12. Moulding composition encompassing
a) at least 70% by weight of impact modifier which encompasses at least one polyalkyl (meth)acrylate phase,
b) at least 8% by weight of polyalkyl (meth)acrylate bead polymers whose median particle size V₅₀ is in the range from 30 to 70 µm, and
c) from 5 to 20% by weight of polyalkyl (meth)acrylates whose molar mass is in the range from 20,000 to 350,000 g/mol,
where the % by weight figures for components a) to c) give 100% by weight,
**characterized in that** the impact modifier is obtainable via an at least two-stage polymerization, where, in a first stage, a hard phase A) whose glass transition temperature Tg is > 25°C encompassing at least 70% by weight of methyl methacrylate is prepared, and then, in a second stage, monomers of the tough phase B), the polymers of which have a glass transition temperature Tg of < 25°C, are added, and the polymerization is completed.

13. Moulding composition according to Claim 12, **characterized in that** the impact modifier encompasses a polyalkyl (meth)acrylate phase whose glass transition temperature Tg is greater than 25°C.

14. Moulding composition according to Claim 12, **characterized in that** the impact modifier is capable of thermoplastic processing.

15. Moulding composition according to at least one of Claims 12 to 14, **characterized in that** the impact modifier is obtainable via bead polymerization.

16. Moulding composition according to Claim 12, **characterized in that** the polymerization of the hard phase A) in the first stage takes place in the presence a) of an oil-soluble free-radical initiator, and b) of an organic sulfur regulator having at least two thiol groups in the molecule.

17. Moulding composition according to Claim 12 or 16, **characterized in that** the polymerization of the monomers of the tough phase B) in the second stage takes place with use of graft-linking agents in the presence of the hard phase first formed.

18. Moulding encompassing a moulding composition according to at least one of Claims 12 to 17.

19. Moulding according to Claim 18, **characterized in that** the moulding comprises at least 80% by weight of moulding composition according to at least one of Claims 12 to 17.

20. Moulding according to Claim 18 or 19, **characterized in that** the moulding produced via extrusion with a thickness of 3 mm, a width of 3.5 cm and a length of 55 cm has at most 4 fractures, preferably less than 3 fractures, after 5 minutes in a flexed condition at 23°C in an ethanol/water mixture (ratio by volume: 90/10).

21. Moulding according to at least one of Claims 18 to 20, **characterized in that** the moulding has a modulus of elasticity greater than or equal to 1000 MPa to ISO 527-2.

22. Moulding according to at least one of Claims 18 to 21, **characterized in that** the moulding has a Vicat softening point greater than or equal to 75°C.

23. Moulding according to at least one of Claims 18 to 22, **characterized in that** the moulding has an average surface roughness R_{Z} of the sheet in the range from 4 to 70 µm.

## Revendications

1. Utilisation de polymères en perles de poly((méth)acrylate d'alkyle) présentant une grosseur moyenne de particule V₅₀ dans la plage de 30 à 70 µm pour l'amélioration de la résistance aux fissures de contrainte de masses de moulage comprenant du poly((méth)acrylate d'alkyle), **caractérisée en ce que** la masse de moulage comprend au moins 80 % en poids de poly((méth)acrylate d'alkyle).

2. Utilisation selon la revendication 1, **caractérisée en ce que** les masses de moulage comprenant du poly((méth)acrylate d'alkyle) contiennent au moins un agent de modification de la résilience.

3. Utilisation selon au moins l'une quelconque des revendications précédentes, **caractérisée en ce que** les poly((méth)acrylates d'alkyle) de la masse de moulage peuvent être obtenus par polymérisation de mélanges de monomères qui comprennent au moins 20% en poids de méthacrylate de méthyle, par rapport aux monomères.

4. Utilisation selon au moins l'une quelconque des revendications précédentes, **caractérisée en ce qu'**une partie des poly((méth)acrylates d'alkyle) sont des copolymères présentant un effet de modification de la résilience.

5. Utilisation selon au moins l'une quelconque des revendications précédentes, **caractérisée en ce qu'**une partie des poly((méth)acrylates d'alkyle) peut être obtenue par polymérisation de mélanges de monomères qui comprennent au moins 90% en poids de méthacrylate de méthyle, par rapport aux monomères.

6. Utilisation selon au moins l'une quelconque des revendications précédentes, **caractérisée en ce qu'**au moins une partie des polymères en perles de poly((méth)acrylate d'alkyle) est réticulée.

7. Utilisation selon au moins l'une quelconque des revendications précédentes, **caractérisée en ce que** les polymères en perles de poly((méth)acrylate d'alkyle) peuvent être obtenus par polymérisation de mélanges de monomères qui comprennent au moins 50% en poids de méthacrylate de méthyle, par rapport au poids des monomères.

8. Utilisation selon au moins l'une quelconque des revendications précédentes, **caractérisée en ce que** les polymères en perles de poly((méth)acrylate d'alkyle) peuvent être obtenus par polymérisation de mélanges de monomères qui comprennent au moins 0,5% en poids de monomères réticulants, par rapport au poids des monomères.

9. Utilisation selon au moins l'une quelconque des revendications précédentes, **caractérisée en ce que** les polymères en perles de poly((méth)acrylate d'alkyle) présentent un indice de réfraction n_{D} à 20°C différent de la masse de moulage comprenant le poly((méth)acrylate d'alkyle).

10. Utilisation selon la revendication 9, **caractérisée en ce que** la différence entre l'indice de réfraction de la masse de moulage comprenant le poly((méth)acrylate d'alkyle) et l'indice de réfraction des polymères en perles, mesurés à la raie D du Na (589 nm) et à 20°C, est d'au moins 0,01.

11. Utilisation selon au moins l'une quelconque des revendications précédentes, **caractérisée en ce que** les masses de moulage comprennent au moins 5% en poids de polymères en perles de poly((méth)acrylate d'alkyle).

12. Masse de moulage, comprenant
a) au moins 70% en poids d'agent de modification de la résilience, qui comprend au moins une phase de poly((méth)acrylate d'alkyle),
b) au moins 8% en poids de polymères en perles de poly((méth)acrylate d'alkyle) présentant une grosseur moyenne de particule V₅₀ dans la plage de 30 à 70 µm et
c) 5 à 20% en poids de poly((méth)acrylates d'alkyle) présentant un poids moléculaire dans la plage de 20.000 à 350.000 g/mole, le % en poids des composants a) à c) valant 100% en poids,
**caractérisée en ce que** l'agent de modification de la résilience peut être obtenu par une polymérisation au moins en deux étapes, une phase dure A) présentant une température de transition vitreuse Tg > 25°C, comprenant au moins 70% en poids de méthacrylate de méthyle, étant préparée dans une première étape et des monomères de la phase tenace B), dont les polymères présentent une température de transition vitreuse Tg < 25°C, étant ensuite ajoutés dans une deuxième étape et la polymérisation étant menée jusqu'à la fin.

13. Masse de moulage selon la revendication 12, **caractérisée en ce que** l'agent de modification de la résilience comprend une phase de poly((méth)acrylate d'alkyle) présentant une température de transition vitreuse Tg supérieure à 25°C.

14. Masse de moulage selon la revendication 12, **caractérisée en ce que** l'agent de modification de la résilience peut être mis en œuvre de manière thermoplastique.

15. Masse de moulage selon au moins l'une quelconque des revendications 12 à 14, **caractérisée en ce que** l'agent de modification de la résilience peut être obtenu par polymérisation en perles.

16. Masse de moulage selon la revendication 12, **caractérisée en ce que** la polymérisation de la phase dure A) dans la première étape a lieu en présence a) d'un initiateur radicalaire soluble dans l'huile et b) d'un agent de régulation organique à base de soufre présentant au moins deux groupes thiol dans la molécule.

17. Masse de moulage selon la revendication 12 ou 16, **caractérisée en ce que** la polymérisation des monomères de la phase tenace B) dans la deuxième étape a lieu avec utilisation de réticulants de greffage en présence de la phase dure formée en premier lieu.

18. Corps façonné comprenant une masse de moulage selon au moins l'une quelconque des revendications 12 à 17.

19. Corps façonné selon la revendication 18, **caractérisé en ce que** le corps façonné comprend au moins 80% en poids de la masse de moulage selon au moins l'une quelconque des revendications 12 à 17.

20. Corps façonné selon la revendication 18 ou 19, **caractérisé en ce que** le corps façonné, préparé par extrusion avec une épaisseur de 3 mm, une largeur de 3,5 cm et une longueur de 55 cm, dans un état plié à 23°C dans un mélange éthanol-eau (rapport volumique : 90/10), après 5 minutes, présente au maximum 4 fêlures, de préférence moins de 3 fêlures.

21. Corps façonné selon au moins l'une quelconque des revendications 18 à 20, **caractérisé en ce que** le corps façonné présente un module E selon la norme ISO 527-2 supérieur ou égal à 1000 MPa.

22. Corps façonné selon au moins l'une quelconque des revendications 18 à 21, **caractérisé en ce que** le corps façonné présente une température de ramollissement selon Vicat supérieure ou égale à 75°C.

23. Corps façonné selon au moins l'une quelconque des revendications 18 à 22, **caractérisé en ce que** le corps façonné présente une rugosité moyenne de surface R_{z} de la plaque dans la plage de 4 à 70 µm.
